# EUROPÄISCHE PATENTSCHRIFT

(11) **EP 0 584 561 B1**
(45) Veröffentlichungstag und Bekanntmachung des Hinweises auf die Patenterteilung: **01.10.1997**
(21) Anmeldenummer: 93111991.1
(22) Anmeldetag: 27.07.1993
(51) Int. Cl.: G01M 1/28

(54) **Vorrichtung zur Umwuchtmessung eines frei drehbaren, an einem Kraftfahrzeug montierten Kraftfahrzeugrades und Anwendungen**
Device for measuring the imbalance of a freely rotatable wheel mounted on a vehicle and applications
Dispositif de mesure du balourd d'une roue, montée sur un véhicule et étant libre en rotation et des utilisations

(30) Priorität: 25.08.1992 DE 4228145
(43) Veröffentlichungstag der Anmeldung: 02.03.1994
(73) Patentinhaber: HOFMANN WERKSTATT-TECHNIK GMBH, D-64319 Pfungstadt (DE)
(72) Erfinder: Goebel, Eickhart, Dipl.-Ing., D-64319 Pfungstadt (DE)
(74) Vertreter: Nöth, Heinz, Dipl.-Phys.

(56) Entgegenhaltungen:
- EP-A- 0 027 848
- EP-A- 0 473 833
- EP-B- 0 074 416
- US-A- 3 066 526

## Beschreibung

Die Erfindung betrifft eine Vorrichtung nach dem Oberbegriff des Patentanspruches 1. Sie betrifft auch Verwendungen nach den Ansprüchen 9,10.

Eine derartige Vorrichtung ist aus der Zeitschrift "Autohaus", 9/1982, Seite 912 - 920, bekannt. Bei der bekannten Vorrichtung wird das zu messende Kraftfahrzeugrad für die freie Drehbarkeit mittels einer Hubvorrichtung, welche gleichzeitig als Kraftmessbock ausgebildet sein kann, angehoben.

Der Antrieb auf Meßdrehzahl erfolgt bei den Antriebsrädern des Kraftfahrzeuges mit Hilfe des Fahrzeugmotors und bei den Nichtantriebsrädern des Kraftfahrzeuges mit Hilfe eines Friktionsrades, das in einer fahrbaren Unwuchtmeßeinrichtung zum Antrieb des zu prüfenden Kraftfahrzeugrades mit diesem in Reibschluß gebracht werden kann. Für den Meßvorgang wird das Friktionsrad vom Rad wieder entfernt und der Unwuchtmeßvorgang im Auslauf des Rades durchgeführt.

Zur Erzielung eines selektiven Meßverfahrens ist es bekannt, das zu messende Rad mit einer reflektierenden Referenzmarke zu versehen und die Raddrehung mit Hilfe einer Optoelektronik (Infrarot-Optoelektronik) zu erfassen (DE-OS 38 28 724).

Während der Rotation des Rades passiert die Referenzmarke zwei benachbart gebündelte Infrarot-Lichtstrahlen, wobei von der Referenzmarke reflektierte Lichtreflexpaare von einem Empfänger erfaßt werden. Durch die Reihenfolge der Doppelreflexe und der gemessenen Zeitintervalle zwischen aufeinanderfolgenden Doppelreflexen gewinnt man eine Information über die Raddrehrichtung, über die mittlere Raddrehzahl/Winkelgeschwindigkeit während des zuletzt vergangenen Zeitintervalls einer Radumdrehung sowie Änderungen der mittleren Drehzahl zwischen den letzten Radumdrehungen. Aufgrund dieser Information und unter Berücksichtigung der Drehzahlveränderung bei den vorhergehenden Radumdrehungen kann jeweils für die nächste Meßperiode während einer Radumdrehung das voraussichtliche Zeitintervall extrapoliert werden und dieses erwartete Zeitintervall kann so unterteilt werden, daß die Zeitteile angenommenen konstanten Drehwinkeln des Rades während dieser Zeitteile entspricht.
Durch Fliehkraftmessung des, auf der Hubeinrichtung, insbesondere Meßbock-abgestützten Rades während dieser zeitlichen Intervallunterteilungen und Auswertung, nach bei stationären Auswuchtmaschinen bekannten Verfahren, ist eine selektive Messung des Unwuchtmektors möglich.
Bei Beachtung der ermittelten Raddrehrichtung kann die Ausgleichsposition, in welcher das Ausgleichsgewicht zu befestigen ist, drehrichtungsunabhängig angezeigt werden.
Ungenauigkeiten können sich dadurch ergeben, daß beim Messen im Auslauf der Drehzahlabfall nicht linear verläuft. Der Drehzahlabfall ist von verschiedenen Faktoren wie Reibung, schleifende Bremse, Luftverwirbelung und dergleichen abhängig. Beim Messen der Antriebsräder und beim Antrieb dieser Räder durch den Fahrzeugmotor können durch unruhigen Motorlauf oder durch den Einfluß des Ausgleichsgetriebes bzw. der Kardangelenke Drehzahländerungen auftreten. Derartige Drehzahländerungen führen bei der Extrapolation auf das Zeitintervall der nächstfolgenden Radumdrehung zur fehlerhaften Auswertung der Meßsignale bei der Ermittlung der Ausgleichgewichtsgrößen und Winkellagen für die Ausgleichsgewichte.
Außerdem ist es für die Bedienungsperson schwierig, eine gute Ausrichtung der optischen Abtasteinrichtung zur Referenzmarke am zu messenden Rad zu erreichen. Hierdurch kann es zu weiteren Meßwertverfälschungen kommen.

Weiterhin ist ein über eine Band angekoppelter Eindrehinkrementalgebe aus der EP-B1-74416 bekannt.

Aufgabe der Erfindung ist es daher, eine Vorrichtung der eingangs genannten Art zu schaffen, mit der eine verbesserte Genauigkeit bei der Auswertung der, von den Kraftmeßgebern gelieferten, Signale für die Bestimmung der Größe der Ausgleichgewichte und der Winkellagen der Ausgleichgewichte erreicht wird.

Diese Aufgabe wird erfindungsgemäß durch die kennzeichnenden Merkmale des Patentanspruches 1 gelöst.

Die Unteransprüche kennzeichnen Weiterbildungen der Erfindung.

Bei der Erfindung wird auch innerhalb des Zeitraumes zwischen jeweils zwei Abtastungen der Referenzmarkierung am Rad eine Information über die Momentan-Position bzw. Drehgeschwindigkeit des Rades erhalten. Jeweils von dem Zeitpunkt, an welchem die Abtastung der Markierung am Rad beispielsweise durch Empfang der reflektierten Strahlung erfaßt wird, werden die während der Drehung der Rades sich ergebenden Inkremente gezählt. Dadurch, daß der Zählerstand, welcher zwischen dem Erfassen jeweils zweier Referenzreflexe gezählt wird, einem Drehwinkel von 360° zugeordnet wird, erreicht man eine genaue Information über die jeweilige Momentan-Winkelposition des sich drehenden Rades.

Auf diese Weise wird erreicht, daß der Zählerstand dem jeweiligen Drehwinkel direkt proportional ist, sodaß die Fliehkraftmessung, bei welcher die aus der Unwucht resultierenden Kräfte ermittelt werden, genau drehwinkelbezogen durchgeführt werden kann.
Außerdem ist es möglich, die erhaltenen Meßwerte in Abhängigkeit von der tatsächlich vergangenen Zeit für das Meß- bzw. Winkelintervall drehzahlabhängig so zu bewerten, daß die quadratische Abhängigkeit der Fliehkraft von der Drehzahl eliminiert ist. Durch die gezählten Inkremente des Inkrementalgebers, der während des Meßvorganges das umlaufenden Rad abtastet, erzielt man ferner Informationen über die jeweils aktuelle Radposition relativ zur Referenzmarke, über die aktuelle Winkelgeschwindigkeit (Drehzahl) bzw. mittlere Geschwindigkeit - auch für einen kleinen Winkelbereich - sowie über den aktuellen Raddurchmesser.

Zur Gewinnung der Inkremente wird bevorzugt der Luftreifen des Kraftfahrzeugrades abgetastet. Insbesondere erfolgt die Abtastung an der Lauffläche des Luftreifens. Für diese Abtastung kann eine frei festlegbare Impulszahl bzw. Inkrementzahl pro Drehung des jeweils abzutastenden Kraftfahrzeugrades und auch pro Drehung der Abtastrolle festgelegt werden.
Die zusätzliche Abtastung des Kraftfahrzeugrades so, daß jeweils zwischen zwei Abtastungen der Radmarkierung eine gleichgroße Anzahl an Inkrementen vom Inkrementalgeber geliefert und für die Drehwinkelbestimmung gezählt werden.

Die zusätzliche Abtastung kann mit Hilfe einer Rolle erfolgen, die auf die Reifenlauffläche der Kraftfahrzeugrades aufsetzbar ist. Diese Abtastrolle kann im Meßbock, beispielsweise im vorderen Querholm des Meßbocks, untergebracht sein, sodaß sie unterhalb des zu messenden angehobenen Rades angeordnet werden kann. Bevorzugt ist die Abtastrolle federnd im Meßbock gelagert. Die Abtastrolle kann manuell oder automatisch z.B. beim Belasten des Meßbockes, aus einer versteckten Ruheposition unterhalb des Querholmes federnd an das Kraftfahrzeugrad angelegt werden.

Der Inkrementalgeber ist bevorzugterweise so ausgebildet, daß die Drehrichtung der Inkremente erkannt wird. Diese Drehrichtungserkennung ermöglicht nicht nur die bisherige drehrichtungsunabhängige Positionsanzeige für das zu befestigende Ausgleichsgewicht, sondern auch das gezielte Eindrehen des Rades in die exakte Ausgleichsposition nach einem Meßlauf. Die Position der am Rad angebrachten Referenzmarke relativ zur Meßrichtung ist hierbei ohne Bedeutung, weil sowohl bei der Unwuchtmessung als auch beim Eindrehen in die Ausgleichsposition der gleiche Bezugspunkt verwendet wird.

Für die berührungslose Abtastung zur Bildung von Inkrementen können Oberflächenstrukturen des Kraftfahrzeugrades, insbesondere des Reifens, abgetastet werden. Die Abtastung kann optisch oder kapazitiv erfolgen. Für die Bildung der Inkremente, welche dem Zähler weitergeleitet werden, kann die Oberflächenstruktur im Abtastbereich für eine gesamte Umdrehung (Vollwinkel) bestimmt und abgespeichert werden.
Die 360°-Zuordnung bzw. Einzelwinkelbestimmung kann dann aus der Wiederholung des abgespeicherten Gesamtstrukturmusters bzw. aus der Wiederholung von markanten Strukturen bestimmt werden.

In vorteilhafter Weise ist es nicht mehr erforderlich, die Abtasteinrichtung für die Abtastung der am Rad vorhandenen Referenzmarke mittig zum Rad auszurichten. Diese Abtasteinrichtung kann an der Hubeinrichtung zum Anheben des Rades, welche auch als Meßbock ausgebildet sein kann, angeordnet sein. Es ist jedoch auch möglich diese Abtasteinrichtung an der fahrbaren Unwuchtmeßeinrichtung mit dem Friktionsrad vorzusehen. Ferner kann die Ausgleichsposition, in welcher das Ausgleichsgewicht am Rad befestigt wird, exakt und unabhängig vom Augenmaß der Bedienungsperson eingedreht werden. Die exakte Aufteilung einer Radumdrehung in gleichmäßige Winkelsegmente für die Entnahme von Meßwerten erfolgt unabhängig von Drehzahländerungen während dieser Umdrehung. Hierdurch erreicht man die höhere Meßgenauigkeit. Während man derzeit mit bekannten, fahrbaren Unwuchtmeßeinrichtungen eine Winkelauflösung von etwa 15° erreicht, kann eine Winkelauflösung erreicht werden, die derjenigen von stationären Maschinen gleichkommt. Eine Unwuchtwinkelanzeige kann entfallen und durch eine Eindrehrichtungsanzeige wie bei stationären Maschinen (z.B. Hofmann-Prospekt "Geodyna 30/45/85, Impressum 940212208-.87D") erreicht werden. Das Eindrehen in die Ausgleichsposition kann in jeder Drehrichtung erfolgen, sodaß aus jeder Radstellung nach dem Meßlauf die kürzeste Eindrehrichtung angezeigt werden kann.

Mit Hilfe einer federnd an der Lauffläche des Reifens anliegenden Abtastrolle kann ferner bei der Rotation des Rades die Außenkontur des Rades abgetastet werden, wodurch sich ein Geometriefehler des Rades (Radialschlag) winkelbezogen erfassen läßt. Damit ist eine Anzeige des Radialschlages als Vektor oder eine winkelbezogene grafische Anzeige möglich. Als Spannungsversorgungen für die fahrbare Unwuchtmeßeinrichtung können wie üblich Batterien eingesetzt werden. Für das Aufladen der Batterien kann nicht nur das Netz verwendet werden, sondern die zusätzliche Abtastrolle kann einen Generator antreiben, der von der sich mitdrehenden Abtastrolle angetrieben wird.

In vorteilhafter Weise können die gebildeten Inkremente und die Zählung dieser Inkremente zur Messung des Radumfanges bzw. Raddurchmessers verwendet werden. Dies ist möglich, weil der Außenumfang der Tastrolle bzw. der berührungslos abgetastete Umfang am Rad bekannt ist. Hieraus läßt sich auch die Umfangsgeschwindigkeit des Rades ermitteln und unter Zuhilfenahme dieser Umfangsgeschwindigkeitsmessung eine Überprüfung oder Eichung des Tachometers des Kraftfahrzeugs durchführen.

Anhand der Figuren wird an einem Ausführungsbeispiel die Erfindung noch näher erläutert. Es zeigt:
- Fig. 1: eine schematische Darstellung einer fahrbaren Unwuchtmeßvorrichtung, welche ein Ausführungsbeispiel der Erfindung ist;
- Fig. 2: ein Ausführungsbeispiel für einen Inkrementalgeber, welcher beim Ausführungsbeispiel der Fig. 1 zum Einsatz kommen kann; und
- Fig. 3: ein weiteres Ausführungsbeispiel.

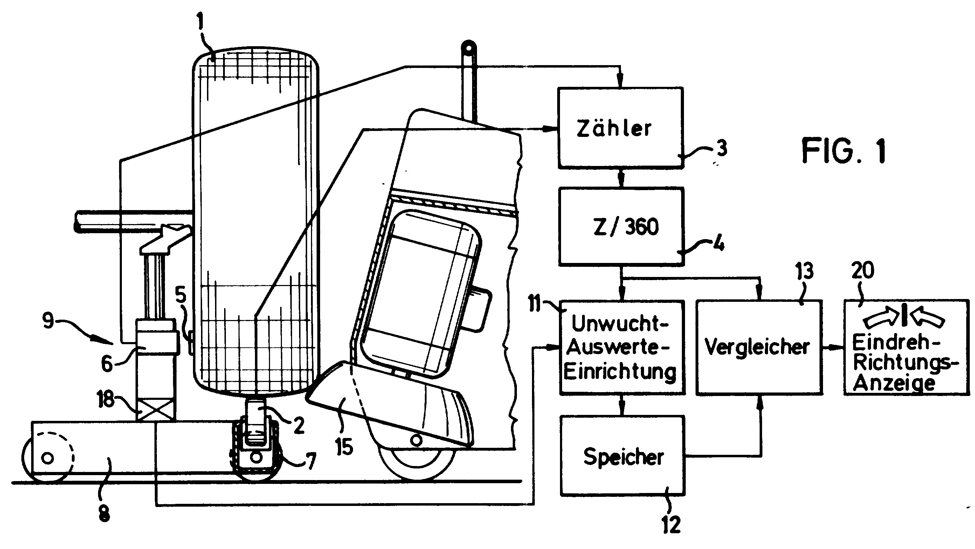

Bei dem in Fig. 1 dargestellten Ausführungsbeispiel ist ein zu messendes Rad 1 von einer Hubeinrichtung 9 angehoben. Es handelt sich hier beispielsweise um das Nichtantriebsrad eines Kraftfahrzeuges. Mit Hilfe eines Friktionsrades 15, daß in einer auf Rollen 16 fahrbaren Unwuchtmeßeinrichtung angeordnet ist und von einem Antriebsmotor 17 (Elektromotor) antreibbar ist, kann das zu messende Kraftfahrzeugrad 1 auf eine bestimmte Drehzahl gebracht werden. Eine derartige bekannte fahrbare Unwuchtmeßeinrichtung ist beispielsweise aus der DE 38 28 724 bekannt und auch in Autohaus, 9/1982 Seiten 912 bis 920 beschrieben.

Die Hubeinrichtung 9 kann, wie aus der deutschen Offenlegungsschrift 2058872 bekannt ist, als Meßbock ausgebildet sein. Sie enthält zur Erfassung der beim Unwuchtmeßvorgang erzeugten Fliehkräfte eine Kraftmeßeinrichtung 18, deren Ausgangssignale einer Unwuchtauswerteeinrichtung 11 (z.B. bekannt aus "Hofmann News" 5, Impressum 09.85D) zugeführt werden.

Am Meßbock ist ferner eine Abtasteinrichtung 6 vorgesehen, welche eine am Kraftfahrzeugrad 1, insbesondere am Luftreifen des Kraftfahrzeugrades angebrachte, reflektierende Referenzmarkierung 5 optisch abtastet und optoelektronisch auswertet. Jedesmal wenn die Referenzmarkierung 5 an der Abtasteinrichtung 6 vorbeiläuft wird ein entsprechender Impuls an einen Zähler 3 weitergegeben.

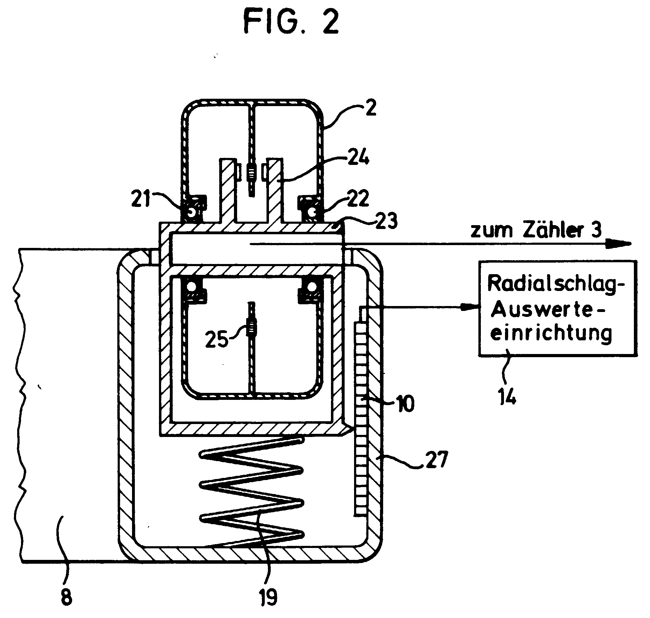

Mit dem Zähler 3 ist ferner ein Inkrementalgeber, der sich zusammensetzt aus einer Abtastrolle 2 und einer die Abtastrolle 2 enthaltenden Gebereinrichtung 7 verbunden. Einzelheiten des Inkrementalgebers sind in der Fig. 2 dargestellt. Durch die Abtastrolle 2 des Inkrementalgebers wird beim dargestellten Ausführungsbeispiel eine Abtastung der Reifenlauffläche des Kraftfahrzeugrades 1 durchgeführt. Hierzu ist die Abtastrolle 2 mit der Gebereinrichtung 7 an der als Meßbock ausgebildeten Hubeinrichtung 9 vorgesehen. Beim dargestellten Ausführungsbeispiel ist der Inkrementalgeber an einem vorderen Querholm der Hubeinrichtung 9 angeordnet, sodaß der Inkrementalgeber bzw. die Abtastrolle 2 unterhalb des zu messenden, angehobenen Rades 1 gefahren werden kann. Während des Meßlaufes wird die Abtastrolle 2 mit Hilfe einer Federeinrichtung (z.B. Druckfedern 19 in Fig. 2) gegen die Reifenlauffläche gedrückt. Die Abtastrolle 2 kann ständig aus einer Öffnung im vorderen Querholm 8 des Meßbockes unterhalb des Rades 1 herausragen. Es ist jedoch auch möglich, daß die Abtastrolle 2 nur zum Auswuchten manuell oder automatisch, z.B. bei Belastung des Meßbockes 9 aus einer zurückgezogenen Ruheposition federnd an den Reifen des Kraftfahrzuegrades 1 gedrückt wird.

Bevorzugterweise ist die Abtastrolle 2 aus leichtem dünnwandigem Material, z.B. einem Kunststoffhohlkörper hergestellt. Dieser ist mit Hilfe von Kugellagern 21/22 auf einer festen Hohlachse 23 gelagert.
Zur Erfassung der Drehbewegung des Rollenkörpers der Abtastrolle 2 ist in der Hohlachse 23 eine induktiv- oder kapkazitiv- oder optisch-abtastende Abtasteinrichtung 24 vorgesehen. Diese wirkt mit entsprechenden Markierungen 25 am Rollenkörper der Abtastrolle 2 zusammen. Die Abtasteinrichtung 24 ist elektrisch mit der Inkrementalgebereinrichtung 7 verbunden, welche entsprechende Inkrementsignale an den Zähler 3 weitergibt. Durch die Inkremente wird der Zähler 3 fortgeschaltet. Beginnend mit einem jeweiligen Signal z.B. Impuls, welches durch die an der Abtasteinrichtung 6 vorbeilaufende Markierung 5 am Kraftfahrzeugrad erzeugt wird. Der Zähler 3 liefert an eine Bezugseinrichtung 4, welche beispielsweise als Dividierer ausgebildet sein kann, die Zählerrate zwischen zwei von der Markierung 5 erzeugten Referenzsignale. Dadurch, daß diese Zählerrate Z/360 in der Winkelbezugseinrichtung 4 dividiert wird, erreicht man eine winkelpropotionale Information für jedes Inkrement, daß den Zähler 3 erreicht. Wenn die Anzahl der Inkremente zwischen jeweils zwei, durch die Markierung 5 erzeugte Referenzimpulse Z (jeweilige Zählerrate des Zählers 3) beträgt, beinhaltet jedes Inkrement einen Winkelwert von Z/360. Diese fortlaufenden Winkelwertinformationen werden während des Meßlaufes an die Unwuchtauswerteeinrichtung 11 weitergegeben. In der Unwuchtauswerteeinrichtung wird dann die Größe des an Rad 1 anzubringenden Ausgleichsgewichts und die Winkelposition, in welcher das Ausgleichsgewicht zu befestigen ist, in bekannter Weise berechnet. Sowohl die Größe des Ausgleichsgewichtes als auch die Winkelposition können angezeigt werden und die Bedienungsperson kann dann nach dem Meßvorgang das Rad in die entsprechende Ausgleichsposition für die Befestigung des Ausgleichsgewichts drehen.

Es ist jedoch auch möglich nur die Größe des Ausgleichsgewichts anzuzeigen und die Winkellage für das Ausgleichsgewicht in einer Speichereinrichtung 12, welche an die Auswerteeinrichtung 11 angeschlossen ist, zu speichern. Für das Eindrehen des Kraftfahrzeugrades 1 in die Ausgleichsposition liefert der aus Abtastrolle 2 und Gebereinrichtung 7 bestehende Inkrementalgeber über den Zähler und die Winkelbezugseinrichtung 4 entsprechende Drehwinkelinformationen, die einem Vergleicher 13, welcher mit dem Speicher 12 verbunden ist, zugeleitet werden. Die Abweichung der jeweiligen Drehwinkelposition des einzudrehenden Rades 1 in die Ausgleichsstellung bzw. das Erreichen der Ausgleichsstellung kann durch eine, vom Vergleicher 13 angesteuerte Eindrehrichtungsanzeige 20, z.B. eine Leuchtdiodeneinrichtung in bekannter Weise angezeigt werden, sodaß die Bedienungsperson weiß, wann das Rad 1 sich in der Ausgleichsposition befindet. Beispielsweise in der 12 Uhr-Position des Rades 1 kann dann das Ausgleichsgewicht eingeschlagen werden.

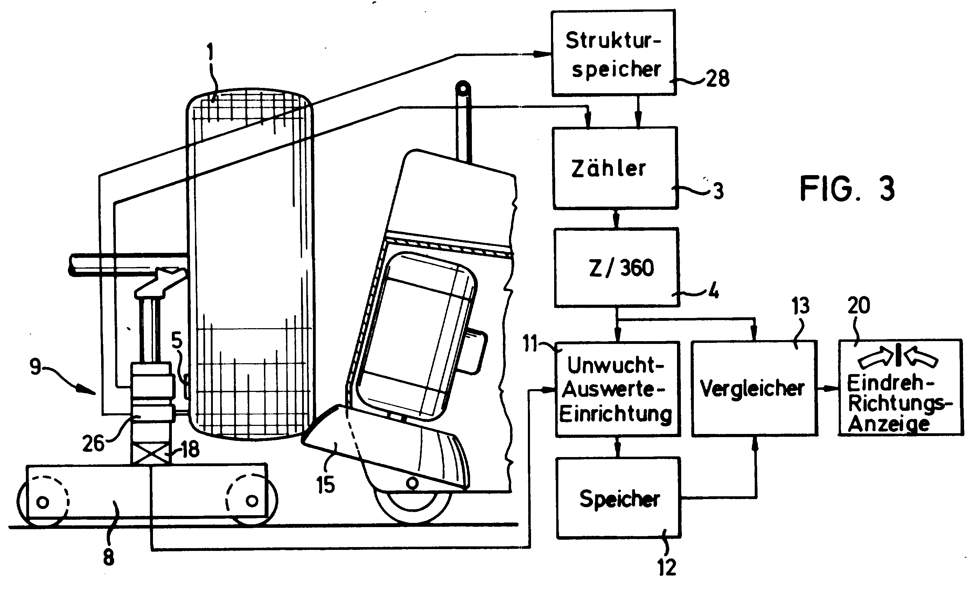

Mit der Abtastrolle 2 kann auch eine Geometrieabweichung des Kraftfahrzeugrades 1 von dem gewünschten Rundlauf angezeigt werden. Dieser Radialschlag kann in bevorzugt vertikaler Richtung durch vertikale Verschiebbarkeit der Hohlachse 23 und damit der darauf gelagerten Abtastrolle 2 im Holm 8 der Hubeinrichtung erreicht werden. Hierzu kann eine vertikale Führung 27, welche auch die Druckfeder 19 aufnimmt, vorgesehen sein. Mit Hilfe einer Sensoreinrichtung 10 kann die Vertikalbewegung der Hohlwelle 23 erfasst werden. Ein entsprechendes Ausgangssignal kann dann an eine Radialschlagauswerteeinrichtung 14 abgegeben werden. Bei dem in der Figur 3 dargestellten Ausführungsbeispiel erfolgt eine berührungslose Abtastung des Kraftfahrzeugrades im Bereich des Kraftfahrzeugreifens. Hierzu ist eine Abtasteinrichtung 26 vorgesehen, die optisch oder kapazitiv arbeiten kann. Mit Hilfe der Abtasteinrichtung 26 wird die Oberflächenstruktur des Reifens abgespeichert. Hierbei kann eine Abspeicherung im abgetasteten Bereich über einen Vollwinkel (360°) erfolgen, wobei das gesamte in diesem Vollwinkel enthaltene Strukturmuster am Kraftfahrzeugreifen abgetastet und in einem Strukturspeicher 28, der mit der Abtasteinrichtung 26 verbunden ist, gespeichert wird. Markante Strukturen bzw. Strukturelemente werden aus dem Speicher 28 abgerufen und in Form von Inkrementen dem Zähler 3 zugeführt. Die Auswertung erfolgt dann in der gleichen Weise wie beim Ausführungsbeispiel der Figur 1.

## Patentansprüche

1. Vorrichtung zur Unwuchtmessung eines frei drehbaren am Kraftfahrzeug montierten Kraftfahrzeugrades (1) mit einer Hubeinrichtung (9) zum Anheben des zu messenden Rades, einer Antriebseinrichtung (15, 17) für einen Drehantrieb des zu messenden Rades, einer Drehwinkelabtasteinrichtung für das zu messende Rad, welche eine Referenzmarkierung (5) abtastende erste Abtasteinrichtung (6) aufweist, einer Kraftmeßeinrichtung zur Ermittlung von aus einer Radunwucht resultierenden Fliehkräften und einer Auswerteeinrichtung für die Bestimmung von Ausgleichsgewichtsgrößen und bestimmten Winkelpositionen, in denen die Ausgleichsgewichte am Rad zu befestigen sind,
dadurch **gekennzeichnet,**
daß ein den Umlauf des zu messenden Rades (1) abtastender Inkrementalgeber (2, 7; 26, 28) eine zweite Abtasteinrichtung bildet, welche eine an den Luftreifen des Rades (1) anlegbare Abtastrolle (2), die an der Hubeinrichtung (9) federnd gelagert ist, oder eine berührungslose Abtasteinrichtung (26), welche Inkremente aus abgetasteten Oberflächenstrukturen des Kraftfahrzeugrades (1) bildet, aufweist, daß der Inkrementalgeber (2, 7; 26, 28) zwischen zwei Abtastungen der Referenzmarkierung (5) jeweils eine gleich große Anzahl an Inkrementen bildet, und daß ein Drehwinkelgeber (3, 4) an die die Referenzmarkierung abtastende Abtasteinrichtung (6) und an den Inkrementalgeber (2, 7) angeschlossen ist, der die Zählrate zwischen jeweils zwei Abtastungen der Referenzmarkierungen (5) einem Drehwinkel von jeweils 360° zuordnet.

2. Vorrichtung nach Anspruch 1,
dadurch gekennzeichnet, daß die Abtastrolle (2) auf die Lauffläche des Luftreifens des Rades (1) aufsetzbar ist.

3. Vorrichtung nach Anspruch 1 oder 2, dadurch gekennzeichnet, daß die Abtastrolle (2) in vertikaler Richtung beweglich gelagert ist.

4. Vorrichtung nach Anspruch 3, dadurch gekennzeichnet, daß ein Sensor (10) eine Vertikalbewegung der Abtastrolle (2) erfaßt.

5. Vorrichtung nach Anspruch 1, dadurch gekennzeichnet, daß eine optische Abtastung vorgesehen ist.

6. Vorrichtung nach Anspruch 1, dadurch gekennzeichnet, daß eine kapazitive Abtastung vorgesehen ist.

7. Vorrichtung nach einem der Ansprüche 1, 5 und 6, dadurch gekennzeichnet, daß die berührungslose Abtastung mit einer Abtastung einer Radmarkierung (Reifenmarkierung) kombiniert ist.

8. Vorrichtung nach einem der Ansprüche 1 und 5 bis 7, dadurch gekennzeichnet, daß die Oberflächenstruktur im abgetasteten Bereich über einen Vollwinkel abgespeichert wird und die Winkelzuordnung aus der Wiederholung des kompletten 360°-Strukturmusters bzw. aus der Wiederholung von markanten Strukturen bestimmt wird.

9. Verwendung einer Vorrichtung nach einem der Ansprüche 1 bis 8 zur Bestimmung des Radumfangs oder Raddurchmessers.

10. Verwendung einer Vorrichtung nach einem der Ansprüche 1 bis 8 zur Überprüfung bzw. Eichung des Kraftfahrzeugtachometers durch Bezugnahme auf die ermittelte Radumfangsgeschwindigkeit.

## Claims

1. Apparatus for measuring unbalance of a freely rotatable motor vehicle wheel (1) mounted on the motor vehicle, comprising a lifting device (9) for lifting the wheel to be measured, a drive device (15, 17) for a rotary drive for the wheel to be measured, a rotational angle sensing device for the wheel to be measured, which has a first sensing device (6) for sensing a reference marking (5), a force measuring device for ascertaining centrifugal forces resulting from unbalance of the wheel, and an evaluation device for determining compensating weight sizes and given angular positions at which the compensating weights are to be fixed to the wheel,
characterised in that
an incremental generator (2, 7; 26, 28) for sensing the rotation of the wheel (1) to be measured forms a second sensing device having a sensing roller (2) which can be applied against the pneumatic tyre of the wheel (1) and which is resiliently mounted on the lifting device (9), or a contact-less sensing device (26) which forms increments from sensed surface structures of the motor vehicle wheel, the incremental generator (2, 7; 26, 28) forms a respective equal number of increments between each two sensings of the reference marking (5), and that a rotational angle generator (3, 4) is connected to the sensing device (6) for sensing the reference marking and to the incremental generator (2, 7), for associating the counting rate between each two sensings of the reference markings (5) with a respective rotational angle of 360°.

2. Apparatus according to claim 1 characterised in that the sensing roller (2) can be caused to bear against the tread surface of the pneumatic tyre of the wheel (1).

3. Apparatus according to claim 1 or claim 2 characterised in that the sensing roller (2) is mounted movably in a vertical direction.

4. Apparatus according to claim 3 characterised in that a sensor (10) detects a vertical movement of the sensing roller (2).

5. Apparatus according to claim 1 characterised in that there is provided an optical sensing means.

6. Apparatus according to claim 1 characterised in that there is provided a capacitive sensing means.

7. Apparatus according to one of claims 1, 5 and 6 characterised in that contact-less sensing is combined with sensing of a wheel marking (tyre marking).

8. Apparatus according to one of claims 1 and 5 to 7 characterised in that the surface structure in the sensed region over a full angle is stored and the angle association is ascertained from the repetition of the complete 360° structure pattern or from the repetition of prominent structures.

9. Use of an apparatus according to one of claims 1 to 8 for determining the wheel circumference or the wheel diameter.

10. Use of an apparatus according to one of claims 1 to 8 for checking or calibrating the motor vehicle tachometer by reference to the detected wheel peripheral speed.

## Revendications

1. Dispositif de mesure du balourd d'une roue (1) montée sur un véhicule automobile et pouvant tourner librement, comportant un dispositif (9) de levage de la roue à mesurer, un dispositif (15, 17) d'entraînement en rotation de la roue à mesurer, un dispositif de détection d'angle de rotation de la roue à mesurer, lequel comporte un premier dispositif (6) de détection détectant un repaire (5) de référence, un dispositif de mesure de force pour la détermination de forces centrifuges résultant d'un balourd de la roue et un dispositif d'exploitation pour la détermination de grandeurs de contrepoids et de positions angulaires déterminées, dans lesquelles les contrepoids de la roue doivent être fixés,
caractérisé en ce que
un indicateur incrémentiel (2, 7 ; 26, 28) détectant la rotation de la roue (1) à mesurer forme un second dispositif de détection, qui comporte un rouleau (2) de détection, qui peut être appliqué au pneu de la roue (1) et qui est montée sur ressort sur le dispositif (9) de levage, ou un dispositif (26) de détection sans contact, qui forme des incréments à partir de structures détectées de la surface de la roue (1) du véhicule automobile, l'indicateur (2, 7 ; 26, 28) incrémentiel forme entre deux détections du repaire (5) de référence un nombre constant d'incréments et un indicateur (3, 4) d'angle de rotation est connecté au dispositif (6) de détection détectant le repaire de référence et à un indicateur (2, 7) incrémentiel, qui associe ce qui a été compté entre respectivement deux détections des repaires (5) de référence à un angle de rotation de respectivement 360°.

2. Dispositif suivant la revendication 1, caractérisé en ce que le rouleau (2) de détection peut être posé sur la surface de roulement du pneu de la roue (1).

3. Dispositif suivant la revendication 1 ou 2, caractérisé en ce que le rouleau (2) de détection est monté mobile dans la direction verticale.

4. Dispositif suivant la revendication 3, caractérisé en ce qu'un capteur (10) détecte un mouvement vertical du rouleau (2) de détection.

5. Dispositif suivant la revendication 1, caractérisé en ce qu'il est prévu une détection optique.

6. Dispositif suivant la revendication 1, caractérisé en ce qu'il est prévu une détection capacitive.

7. Dispositif suivant l'une des revendications 1, 5 et 6, caractérisé en ce que la détection sans contact est combinée à une détection d'un repaire de roue (repaire de pneu).

8. Dispositif suivant l'une des revendications 1 et 5 à 7, caractérisé en ce que la structure de la surface dans la zone détectée sur un angle complet est mémorisée et l'association angulaire est déterminée à partir de la répétition du motif de la structure complet de 360° ou à partir de la répétition de structures marquantes.

9. Utilisation d'un dispositif suivant l'une des revendications 1 à 8 pour la détermination du périmètre de la roue ou du diamètre de la roue.

10. Utilisation d'un dispositif suivant l'une des revendications 1 à 8 pour contrôler ou étalonner le tachymètre d'un véhicule automobile en se référant à la vitesse déterminée de la circonférence de la roue.
